# EUROPÄISCHE PATENTSCHRIFT

(11) **EP 1 348 581 B1**
(45) Veröffentlichungstag und Bekanntmachung des Hinweises auf die Patenterteilung: **21.06.2006**
(21) Anmeldenummer: 03006035.4
(22) Anmeldetag: 19.03.2003
(51) Int. Cl.: B60H 1/00

(54) **Mehrkanalige Heizungs- und/oder Klimaanlage für ein Kraftfahrzeug**
Heating and/or cooling system for a vehicle with multiple air ducts
Système multicanal de chauffage et/ou de climatisation pour véhicule

(30) Priorität: 27.03.2002 DE 10213607
(43) Veröffentlichungstag der Anmeldung: 01.10.2003
(73) Patentinhaber: Behr France Rouffach SAS, 68250 Rouffach (FR)
(72) Erfinder: Klein, Henri, 68000 Colmar (FR)
(74) Vertreter: Riedel, Peter

(56) Entgegenhaltungen:
- EP-A- 1 024 041
- FR-A- 2 699 457
- FR-A- 2 737 445
- FR-A- 2 771 967
- PATENT ABSTRACTS OF JAPAN vol. 011, no. 074 (M-568), 6. März 1987 (1987-03-06) & JP 61 229609 A (NISSAN MOTOR CO LTD;OTHERS: 01), 13. Oktober 1986 (1986-10-13)

## Beschreibung

Die Erfindung betrifft eine mehrkanalige Heizungs- und/oder Klimaanlage für ein Kraftfahrzeug.

Heizungs- und/oder Klimaanlagen in Kraftfahrzeugen sind immer höher werdenden Anforderungen bezüglich individueller Möglichkeiten der Luftkonditionierung in Verbindung mit einer einfachen Betätigbarkeit ausgesetzt. Um ein behagliches Klima für alle Fahrzeuginsassen zu.schaffen und dem Fahrer ein belastungs- und ermüdungsfreies Umfeld zu bieten, ist neben einer geeigneten vertikalen Temperaturschichtung der Luft im Fahrzeuginnenraum zunehmend auch die Möglichkeit einer individuellen Temperierung der linken bzw. rechten Fahrzeughälfte von Bedeutung.

Die bekannten mehrkanaligen Anlagen mit einem linken und einem rechten Luftzuführungskanal zur separaten Temperatureinstellung in der linken und der rechten Fahrzeughälfte sind insgesamt komplex aufgebaut. Eine individuelle Einstellung der Lufttemperatur bzw. der Temperaturschichtung in einer Fahrzeughälfte ohne eine unerwünschte Beeinflussung der jeweiligen Parameter in der anderen Fahrzeughälfte ist schwierig zu erreichen und erfordert einen komplexen Aufbau der Anlage.

Aus der EP 1 024 041 A1 ist eine Klimaanlage mit zwei Steuerklappen bekannt, die mittels einer Feder untereinander gekoppelt sind. Die Feder erlaubt zwar in begrenztem Umfang eine Relativverdrehung beider Klappen zueinander, bildet jedoch dauerhaft eine kraftschlüssige Verbindung zwischen ihnen. Beide Klappen stehen mittels der Feder unabhängig von ihrer Stellposition in steter Wechselwirkung, wodurch eine unabhängige Betätigbarkeit mittels der Steuerwelle nicht gegeben ist. Vielmehr ist die Stellung der einen Klappe abhängig von der Stellung der anderen Klappe. Diese gegenseitige Abhängigkeit der Schwenkstellung erlaubt keine derartige individuelle Einstellung beider Kanäle, ohne daß die gewählte Einstellung des einen Kanals in Rückwirkung mit der Einstellung des jeweils anderen Kanals steht.

Der Erfindung liegt die Aufgabe zugrunde, eine leistungsfähige mehrkanalige Heizungs- und/oder Klimaanlage mit einfachem Aufbau und präzisen Möglichkeiten zur individuellen Temperierung zu schaffen.

Die Aufgabe wird durch eine Heizungs- und/oder Klimaanlage mit den Merkmalen des Anspruchs 1 gelöst.

Dazu ist vorgesehen, je einen linken bzw. rechten Bypasskanal an einem Heizkörper der Anlage vorbeizuführen, wobei der linke bzw. rechte Bypasskanal dem jeweiligen linken bzw. rechten Luftführungskanal der Anlage zugeordnet ist. Jeder Bypasskanal weist eine eigene, um eine Schwenkachse schwenkbare Steuerklappe auf, mit der der Durchfluß des Luftstromes einstellbar ist. Bei geschlossenen Steuerklappen sind die Bypasskanäle gesperrt. Die Steuerklappen sind über eine gemeinsame, getrennt von der Schwenkachse liegende Steuerwelle unabhängig voneinander betätigbar. Ein durch ein Gebläse geförderter Luftstrom wird durch den Heizkörper geleitet. Abhängig von der eingestellten Heizleistung des Heizkörpers wird der Luftstrom dabei mehr oder weniger erwärmt bzw. auf Umgebungstemperatur belassen. Stromab des Heizkörpers wird der entsprechend konditionierte Luftstrom zumindest teilweise einem linken und einem rechten Luftführungskanal zugeführt.

Die beiden durch die Bypasskanäle geführten Teilluftströme sind nicht der Erwärmung durch den Heizkörper unterzogen und werden als Kaltluftstrom abhängig von der Stellung der jeweiligen Steuerklappe dem Warmluftstrom im zugeordneten Luftführungskanal beigemischt. Durch die unabhängige Betätigbarkeit beider Steuerklappen kann durch entsprechende unabhängige Beimischung von Kaltluft die Temperatur in der linken bzw. rechten Fahrzeughälfte nach Belieben ohne Beeinflussung der jeweils anderen Fahrzeughälfte herabgesetzt werden. Die unabhängige Betätigung beider Steuerklappen durch eine gemeinsame Steuerwelle erfordert einen geringen konstruktiven und fertigungstechnischen Aufwand sowie ein nur geringes Bauvolumen. Durch das Vorhandensein nur einer Steuerwelle ist der technische Aufwand zu deren Betätigung gering. Die Einstellung einer gewünschten Temperaturverteilung erfolgt in einfacher Weise unter Vermeidung von Fehlbedienungen, indem durch Einstellung der Heizleistung des Heizkörpers eine Grundtemperatur vorgewählt und über Betätigung der Steuerwelle diese Grundtemperatur in der linken und/oder rechten Fahrzeughälfte nach Belieben herabgeregelt wird.

In vorteilhafter Weiterbildung sind die Steuerklappen achsparallel und insbesondere um eine gemeinsame Schwenkachse schwenkbar. Neben einem geringen Aufwand für die Lagerung der Steuerklappen ergibt sich ein geringes Bauvolumen sowie ein zumindest etwa symmetrisches Steuerverhalten bezüglich des Luftstromes in beiden Bypasskanälen. Die Steuerwelle ist zweckmäßig mit ihrer Wellenachse parallel zur Schwenkachse der Steuerklappen liegend angeordnet und weist den Steuerklappen zugeordnete Betätigungsnocken auf. Dadurch ist in einfacher Weise eine Übertragung einer Betätigungsbewegung der Steuerwelle auf die jeweiligen Steuerklappen ermöglicht.

Die der linken bzw. der rechten Steuerklappe zugeordneten Betätigungsnocken sind zweckmäßig bezogen auf die Wellenachse um zumindest etwa 180° versetzt angeordnet und derart zu den Steuerklappen beabstandet, daß bei zumindest etwa paralleler Lage der Steuernocken zu den Steuerklappen beide Steuerklappen geschlossen sind. In der dadurch definierten Neutrallage der Steuerwelle erfolgt keine Beimischung von Kaltluft in den linken bzw. rechten Luftführungskanal. Über die Steuerung der Heizleistung des Heizkörpers erfolgt bedarfsweise eine gemeinsame Temperierung beider Fahrzeughälften.

Bei einer Drehung der Steuerwelle um einen vorgegebenen Winkel drückt einer der beiden Betätigungsnocken die jeweilige ihm zugeordnete Steuerklappe auf. Abhängig vom eingestellten Öffnungswinkel der Steuerklappe wird ein entsprechender Kaltluftstrom mehr oder weniger freigegeben und die Lufttemperatur in der zugeordneten Fahrzeughälfte abgesenkt. Durch den Winkelversatz beider Betätigungsnocken um etwa 180° hebt der jeweils andere Nocken von der ihm zugeordneten Steuerklappe ab, in dessen Folge diese geschlossen bleibt. In einfacher Weise wird dadurch erreicht, daß eine der Steuerklappen nur im geschlossenen Zustand der jeweils anderen Steuerklappe betätigbar ist. Ausgehend von der durch die Einstellung der Heizleistung des Heizkörpers vorgegebenen Grundtemperatur wird die Temperatur in einer Fahrzeughälfte nach Wunsch abgesenkt, ohne daß die Grundtemperatur in der jeweils anderen Fahrzeughälfte unerwünscht beeinflußt wird.

In zweckmäßiger Weiterbildung sind die Betätigungsnocken als Kurvenscheiben ausgebildet. Durch angepaßte Auslegung der Kontur der Kurvenscheiben kann in einfacher Weise durch den Konstrukteur eine geeignete Steuercharakteristik der kinematischen Bewegungsübertragung von der Steuerwelle zu den Steuerklappen vorgegeben werden. Insbesondere können durch den 180°-Versatz beider Nocken hervorgerufene Unterschiede in der Steuercharakteristik beider Steuerklappen ausgeglichen werden.

Zur weiteren Vereinfachung der Übertragung einer Steuerbewegung von der Steuerwelle auf die beiden Steuerklappen sind die Steuerklappen in Fließrichtung mittels Federkraft vorgespannt. Die Betätigungsnocken drücken dabei die Steuerklappen gegen die Federkraft in eine geöffnete Stellung. Die Federkraft sorgt für eine sichere Anlage der Steuerklappe an dem jeweiligen Betätigungsnocken. Bei einer Drehung der Steuerwelle in Schließrichtung wird die jeweilige Steuerklappe durch die Federkraft in ihre Schließrichtung nachgeführt. Der Zusatzaufwand einer mechanischen Koppelung zwischen der Steuerwelle und den Steuerklappen zur Erzeugung eines Schließvorganges ist vermieden. Zur Sicherstellung einer präzise definierten Schließstellung der Steuerklappen und damit einhergehend einer zuverlässigen Absperrung des Kaltluftstromes durch den jeweiligen Bypasskanal ist zweckmäßig jeweils ein Klappenanschlag vorgesehen.

Eine einfache Betätigbarkeit der Steuerwelle mit ergänzten Steuermöglichkeiten kann durch die Anordnung eines die Steuerwelle antreibenden Schrittmotors erzielt werden. Durch eine geeignete elektronische Ansteuerung des Schrittmotors kann die Steuercharakteristik der Anlage beispielsweise hinsichtlich eines linearen Zusammenhangs zwischen Einstellung eines Steuerelementes durch einen Fahrzeuginsassen und dem erzielten Temperaturprofil angepaßt werden. Durch Integration des Schrittmotors in einen Regelkreis kann neben einer steuernden Einstellung auch eine Regelung des Temperaturniveaus auf einen gewünschten Sollwert erzielt werden.

Zur Steigerung der Kaltluftbeimischung oder der ausschließlichen Versorgung des Fahrgastinnenraums mit gekühlter Luft ist die Anordnung eines Kältemittelverdampfers stromauf des Heizkörpers zweckmäßig. Um die Windschutzscheibe beschlagfrei zu halten und ggf. zu enteisen, sind entsprechende Defrosterdüsen vorgesehen, denen bedarfsweise Warmluft zuzuführen ist. Bei kalten Umgebungsbedingungen kann die Zufuhr von Warmluft in den Fußraum des Fahrzeuges entsprechender Fußraumdüsen gewünscht sein. Zur Steigerung der Behaglichkeit wird dabei ein Temperaturprofil angestrebt, bei dem die Temperatur im Fußraumbereich gegenüber dem Bereich von Oberkörper und Kopf größer ist.

Bei einer Anordnung eines außerhalb des Bereiches der Bypasskanäle liegenden und vom Heizkörper beaufschlagten zentralen Hauptluftführungskanales kann über diesen bedarfsweise den Defrosterdüsen und/oder den Fußraumdüsen Warmluft zugeführt werden. Mittels der unabhängig voneinander einstellbaren Steuerklappen in den Bypasskanälen kann in der linken und der rechten Fahrzeughälfte im Bereich von Oberkörper, Kopf und Fuß die Temperatur abgesenkt werden. Für beide Fahrzeugseiten ist die Temperatur an den Auslässen einstellbar.

Ein Ausführungsbeispiel der Erfindung wird im folgenden anhand der Zeichnung näher beschrieben. Es zeigen:
- Fig. 1: in perspektivischer Schemadarstellung eine Klimaanlage mit einem Kältemittelverdampfer und einem Heizkörper sowie die mit je einer Steuerklappe in einem linken bzw. rechten, um den Heizkörper herumgeführten Bypasskanäle;
- Fig. 2: eine perspektivische Skizze einer Steuerwelle mit zwei versetzt zueinander angeordneten Kurvenscheiben und je einer der entsprechenden Kurvenscheibe zugeordneten, federvorgespannten Steuerklappe für die Bypasskanäle entsprechend der Anordnung nach Fig. 1;
- Fig. 3: eine Linksschnittdarstellung durch einen linken Bypasskanal mit geschlossener Steuerklappe;
- Fig. 4: einen Längsschnitt durch einen parallel zum Steuerkanal nach Fig. 3 verlaufenden rechten Steuerkanal mit ebenfalls geschlossener Steuerklappe und einer Steuerwelle in einer Position entsprechend der Anordnung nach Fig. 3;
- Fig. 5: die Anordnung nach Fig. 3 mit gedrehter Steuerwelle und durch den entsprechenden Nocken geöffneter Steuerklappe;
- Fig. 6: die Anordnung nach Fig. 4 mit geschlossener Steuerklappe und davon abgehobenem Nocken der Steuerwelle in einer Winkelstellung entsprechend Fig. 5;
- Fig. 7: eine Schnittdarstellung des linken Bypasskanales entsprechend den Fig. 3 und 5 mit geschlossener Steuerklappe und von der Steuerklappe abgehobenem Nocken;
- Fig. 8: in Längsschnittdarstellung den rechten Bypasskanal nach den Fig. 4 und 6 mit entsprechend Fig. 7 gedrehter Steuerwelle und durch den anliegenden Nocken geöffneter Steuerklappe.

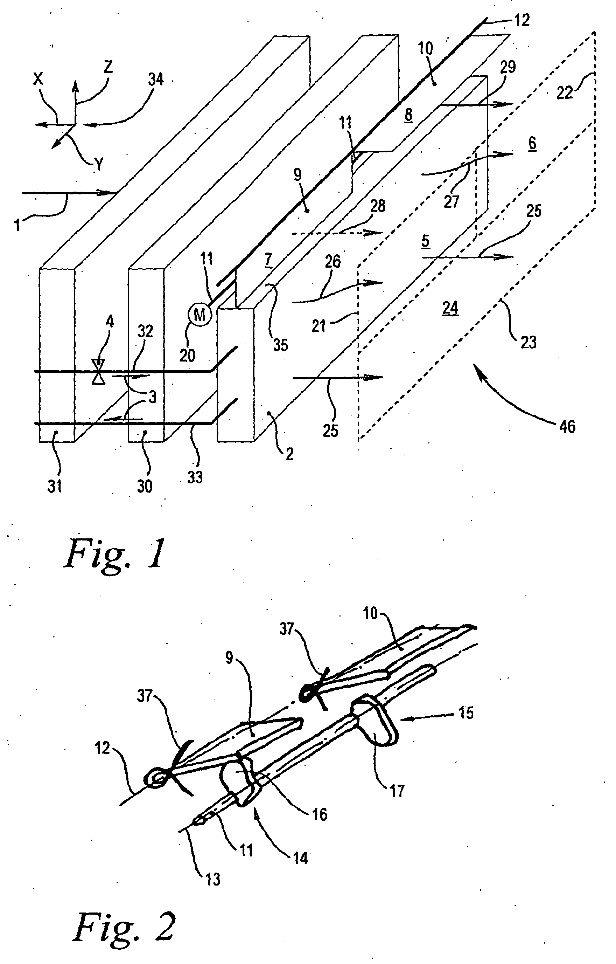

Fig. 1 zeigt in perspektivischer Schemadarstellung die wesentlichen Komponenten einer Klimaanlage 46 eines Kraftfahrzeuges in relativer Ausrichtung zu einem Fahrzeugkoordinatenkreuz 34. Der Pfeil X des Koordinatenkreuzes 34 gibt die Fahrzeuglängsrichtung, der Pfeil Y dessen Links/Rechtsrichtung und der Pfeil Z die Hochrichtung an. Zur Aufbereitung eines durch den Pfeil 1 dargestellten Luftstromes ist in der Klimaanlage 46 nacheinander bezogen auf die Strömungsrichtung ein Luftfilter 31, ein Kältemittelverdampfer 30 und ein Heizkörper 2 angeordnet. Der Luftstrom 1 kann durch den Kältemittelverdampfer 30 bedarfsweise abgekühlt und durch den Heizkörper 2 erwärmt werden. In Kombination des Kältemittelverdampfers 30 mit dem Heizkörper 2 kann die Temperatur des Luftstromes 1 beliebig eingestellt und dabei ein Trocknungseffekt erzielt werden.

Der Heizkörper 2 ist von einem durch die Pfeile 3 dargestellten Wärmemedium, vorzugweise dem Kühlmittel des Fahrzeugmotors durchströmt, wobei das Wärmemedium 3 dem Heizkörper 2 durch Anschlußleitungen 32, 33 zugeführt bzw. von ihm abgeführt wird. Der Durchfluß des Wärmemediums 3 durch den Heizkörper 2 und damit dessen Heizleistung ist mittels eines einstellbaren Ventils 4 steuerbar. Das Ventil 4 ist im gezeigten Ausführungsbeispiel der Anschlußleitung 32 angeordnet, kann aber auch beispielsweise in den Heizkörper 3 integriert sein.

Der durch ein nicht dargestelltes Gebläse geförderte Luftstrom 1 wird am Austritt aus der Klimaanlage 46 verschiedenen, ebenfalls nicht dargestellten Luftdüsen im Fahrzeuginnenraum mittels eines linken und eines rechten Luftführungskanales 5, 6 sowie eines Hauptluftführungskanales 24 zugeführt. Der linke und der rechte Luftführungskanal 5, 6 sowie der Hauptluftführungskanal 24 sind durch entsprechende, die Lage ihrer jeweiligen Querschnitte andeutende, gestrichelt dargestellte Fenster 21, 22, 23 dargestellt. Je ein linker bzw. rechter Bypasskanal 7, 8 ist am Heizkörper 2 vorbeigeführt, wobei im gezeigten Ausführungsbeispiel die beiden Bypasskanäle 7, 8 entlang einer oberen Längskante 35 des Heizkörpers 2 angeordnet sind. Der linke bzw. rechte Bypasskanal 7, 8 ist dem jeweiligen linken bzw. rechten Luftführungskanal 5, 6 zugeordnet.

Stromab des Kältemittelverdampfers 30 ist der Luftstrom 1 in durch Pfeile 25, 26, 27, 28, 29 dargestellte Teilluftströme aufgeteilt. Die Teilluftströme 25, 26, 27 durchströmen den Heizkörper 2, wobei ihre Temperatur über den Kältemittelverdampfer 30 und den Heizkörper 2 entsprechend der Stellung des Ventils 4 eingestellt ist.

Der Hauptluftführungskanal 24 ist außerhalb des Bereiches der Bypasskanäle 7, 8 angeordnet und von dem Heizkörper 2 beaufschlagt, indem der Teilluftstrom 25 nach Durchströmen des Heizkörpers 2 in den Hauptluftführungskanal geleitet wird. Die weiteren, den Heizkörper 2 durchströmenden Teilluftströme 26, 27 sind in den linken bzw. rechten Luftführungskanal 5, 6 geleitet. Die Teilluftströme 28, 29 durchströmen die beiden Bypasskanäle 7, 8 unter Umgehung des Heizkörpers 2. Sie weisen Umgebungstemperatur auf oder können durch den Kältemittelverdampfer 30 unter Umgebungstemperatur herabgekühlt werden. In den Bypasskanälen 7, 8 ist je eine Steuerklappe 9, 10 angeordnet, über die der Durchfluß der Teilströme 28, 29 steuerbar ist. Die Steuerklappen 7, 8 sind um eine gemeinsame Schwenkachse 12 schwenkbar gelagert. Die Steuerklappe 9 im linken Bypasskanal 7 ist in geschlossener Position und die Steuerklappe 10 im rechten Bypasskanal in voll geöffneter Stellung dargestellt. Es sind auch beliebige Zwischenpositionen der Steuerklappen 9, 10 einstellbar. In der gezeigten geöffneten Position der Steuerklappe 10 ist der kalte Teilluftstrom 29 im rechten Bypasskanal 8 freigegeben. Der kalte Teilluftstrom 28 des linken Bypasskanales 9 ist - wie durch die gestrichelte Darstellung des entsprechenden Pfeiles angedeutet - in der geschlossenen Position der Steuerklappe 9 unterbunden. Die kalten Teilluftströme 28, 29 werden dem linken bzw. rechten Luftführungskanal 5, 6 zugeleitet, wobei getrennt links bzw. rechts eine Durchmischung und damit einhergehend eine Temperaturherabsetzung der wärmeren Teilluftströme 26, 27 erfolgt. Über den linken bzw. rechten Luftführungskanal 5, 6 wird entsprechenden, in der Zeichnung nicht dargestellten linken bzw. rechten Luftausströmern im Fahrzeuginnenraum temperierte Luft zugeführt.

Parallel zur Schwenkachse 12 ist eine durchgehende Steuerwelle 11 angeordnet, die über einen elektrischen Schrittmotor 20 antreibbar ist. Die beiden Steuerklappen 9, 10 sind durch die durchgehende, gemeinsame Steuerwelle 11 unabhängig voneinander betätigbar. Anstelle des gezeigten Schrittmotors 20 kann auch eine manuelle Betätigung der Steuerwelle 11 zweckmäßig sein.

Die gezeigte mehrkanalige Klimaanlage 1 weist optional den Kältemittelverdampfer 30 und den Luftfilter 31 auf. Eine entsprechend aufgebaute Heizungsanlage ohne Kältemittelverdampfer 30 und/oder eine Anlage ohne Luftfilter 31 kann ebenfalls vorteilhaft sein.

Fig. 2 zeigt in skizzenhafter Perspektivdarstellung Einzelheiten der Anordnung nach Fig. 1 im Bereich der Steuerwelle 11 und der beiden Steuerklappen 9, 10. Die Steuerwelle 11 weist zwei, jeweils der linken bzw. rechten Steuerklappe 9, 10 zugeordnete Betätigungsnocken 14, 15 auf, die im gezeigten Ausführungsbeispiel als angepaßte Kurvenscheiben 16, 17 ausgebildet sind. Die beiden Steuerklappen 9, 10 sind mittels Schenkelfedern 37 um ihre Schwenkachse 12 in Schließstellung vorgespannt bzw. zur Anlage an den jeweiligen Nocken 14, 15 gebracht.

Im gezeigten Ausführungsbeispiel liegt die Wellenachse 13 der Steuerwelle 11 parallel und mit Abstand zur Schwenkachse 12 der beiden Steuerklappen 9, 10. Es kann auch eine Ausführung zweckmäßig sein, bei der beispielsweise die Schwenkachse 12 als Hohlachse ausgeführt ist, in der koaxial die Steuerwelle 11 gelagert ist. Anstelle der Nocken 14, 15 kann auch eine Betätigung der Steuerklappen 9, 10 über Hebel und Schubstangen sowie über andere geeignete Übertragungsmittel erfolgen.

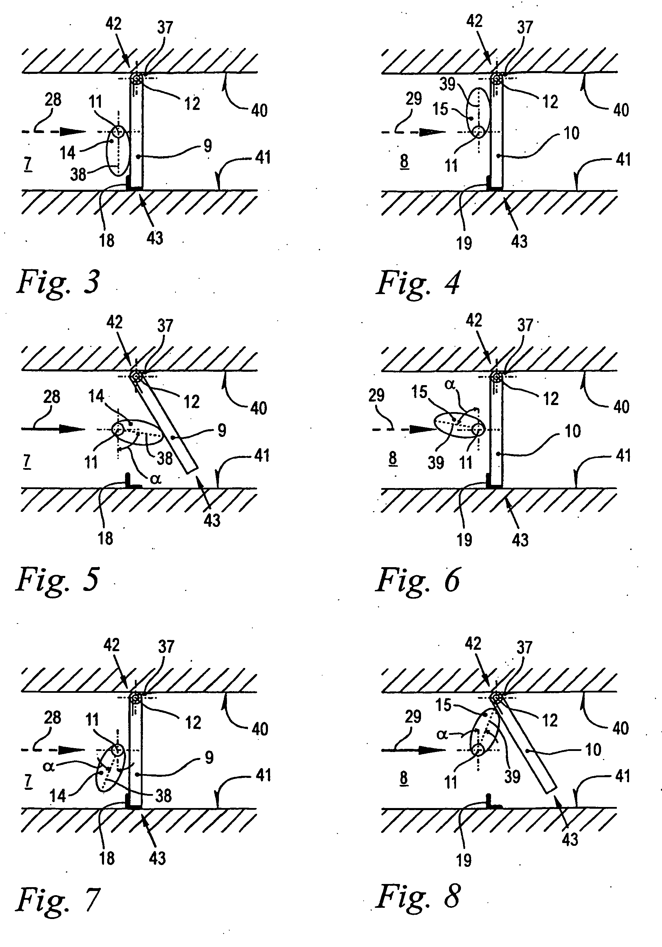

Fig. 3 zeigt in schematischer Darstellung einen Längsschnitt durch den linken Bypasskanal 7 nach Fig. 1. Der Bypasskanal 7 ist durch Kanalwände 40, 41 begrenzt. Die linke Steuerklappe 9 des linken Bypasskanals 7 ist in geschlossener Position gezeigt. Die Schwenkachse 12 der Steuerklappe 9 liegt im Bereich einer an die Kanalwand 40 angrenzenden Längskante 42 der Steuerklappe 9. Die Schenkelfeder 37 ist im Bereich der Schwenkachse 12 angeordnet und derart vorgespannt, daß die Steuerklappe 9 in Schließrichtung gedrückt ist. Dabei liegt die der Längskante 42 gegenüberliegende Längskante 43 an einem Klappenanschlag 18 an.

Die Steuerwelle 11 mit dem der linken Steuerklappe 9 zugeordneten Betätigungsnocken 14 ist in Neutralstellung dargestellt, wobei eine Nockenachse 38 des Betätigungsnockens 14 etwa parallel zur Steuerklappe 9 liegt.

Fig. 4 zeigt in schematischer Darstellung einen Längsschnitt durch den rechten Bypasskanal 8 der Anordnung nach Fig. 1. Die Steuerklappe 10 des rechten Bypasskanals 8 weist entsprechend der Anordnung nach Fig. 3 an die Kanalwände 40, 41 angrenzende Längskanten 44, 45 auf. Die gemeinsame Schwenkachse der Steuerklappe 10 und der Steuerklappe 9 (Fig. 3) verläuft entlang der Längskante 44. Für die gegenüberliegende Längskante 45 der Steuerklappe 10 ist ein Klappenanschlag 19 vorgesehen. Die rechte Steuerklappe 10 ist entsprechend der linken Steuerklappe 9 (Fig. 3) mittels einer Schenkelfeder 47 in Schließrichtung vorgespannt. Die Steuerwelle 11 liegt in der Winkelstellung entsprechend Fig. 3, wobei der der rechten Steuerklappe 10 zugeordnete rechte Betätigungsnocken 15 mit seiner Nockenachse 39 etwa parallel zur Steuerklappe 10 liegt. Die Nockenachse 39 des rechten Betätigungsnockens 15 ist gegenüber der Nockenachse 38 des linken Betätigungsnokkens 14 (Fig. 3) etwa um 180° versetzt angeordnet.

In beiden Anordnungen nach Fig. 3 und Fig. 4 sind die beiden Betätigungsnocken 14, 15 mit geringem Spiel zu den jeweiligen Steuerklappen 9, 10 angeordnet, in dessen Folge diese unter Ausgleich von Lagetoleranzen sicher an den zugehörigen Klappenanschlägen 18, 19 anliegen. In dessen Folge sind bei der gezeigten Neutralstellung der Steuerwelle 11 beide Steuerklappen 9, 10 geschlossen. Der Durchfluß der beiden kalten Teilluftströme 28, 29 durch den jeweiligen Bypasskanal 7, 8 ist entsprechend der gestrichelten Darstellung der jeweiligen Pfeile unterbunden.

Die Fig. 5 und 6 zeigen die jeweiligen Anordnungen nach den Fig. 3 und 4 mit um einen Winkel α in positiver Richtung gedrehter Steuerwelle 11. Dabei drückt entsprechend Fig. 5 der Betätigungsnocken 14 die Steuerklappe 9 des linken Bypasskanales 7 in eine geöffnete Position, wodurch ein Durchfluß des Teilluftstromes 28 durch den linken Bypasskanal 7 ermöglicht wird. Die Vorspannung der Schenkelfeder 37 führt zu einer sicheren Anlage der Steuerklappe 9 am Betätigungsnocken 14. Bei gleicher Winkelstellung der Steuerwelle 11 ist nach Fig. 6 der rechte Betätigungsnocken 15 von der Steuerklappe 10 abgehoben, in dessen Folge durch die Vorspannung der Schenkelfeder 37 bedingt die Steuerklappe 10 in geschlossener Position am Klappenanschlag 19 anliegt. Der durch den gestrichelten Pfeil 29 angedeutete Teilluftstrom 29 im rechten Bypasskanal 8 ist unterbunden. Demnach ist bei positivem Betätigungswinkel α die linke Steuerklappe 9 mehr oder weniger geöffnet, während die rechte Steuerklappe 10 unabhängig von der Stellung der linken Steuerklappe 9 in ihrer geschlossenen Position entsprechend Fig. 4 verbleibt.

Die Fig. 7 und 8 zeigen die Anordnung nach den Fig. 3 und 4 bzw. den Fig. 5 und 6 mit in entgegengesetzter Richtung gedrehter Steuerwelle 11. Demnach sind die Nockenachsen 38, 39 um einen negativen Steuerwinkel α gedreht. Dabei ist der linke Betätigungsnocken 14 von der linken Steuerklappe 9 abgehoben. Unter der Vorspannung der Schenkelfeder 37 verbleibt die linke Steuerklappe 9 im Vergleich zur Neutralstellung nach Fig. 3 in geschlossener Position. Ihre Längskante 43 liegt am Klappenanschlag 18. Entsprechend der gestrichelten Darstellung des Pfeiles 28 ist der entsprechende kalte Teilluftstrom durch den linken Bypasskanal 7 unterbunden. Bei gleicher Winkelstellung der Steuerwelle 11 liegt im rechten Bypasskanal 8 der rechte Betätigungsnocken 15 an der rechten Steuerklappe 10 an und drückt diese abhängig von der Größe des Stellwinkels α in eine mehr oder weniger geöffnete Position. Der kalte Teilluftstrom 29 durch den rechten Bypasskanal 8 ist in entsprechendem Maße freigegeben. Die rechte Steuerklappe ist demnach unabhängig von der in den Fig. 3 und 7 gezeigten geschlossenen Stellung der linken Steuerklappe 9 betätigbar.

Entsprechend der in den Fig. 3 bis 8 gezeigten Anordnung ist jeweils eine Steuerklappe 9, 10 nur im geschlossenen Zustand der jeweils anderen Steuerklappe 10, 9 betätigbar. Es können auch Anordnungen zweckmäßig sein, bei denen in einer Zwischenstellung beide Steuerklappen 9, 10 zumindest teilweise geöffnet sind. Auch ist eine Anordnung mit zusätzlichen Bypasskanälen entsprechenden Aufbaus möglich.

Bei der in Fig. 5 gezeigten Anordnung des linken Bypasskanals 7 drückt der Betätigungsnocken 14 gegen die linke Steuerklappe 9 im Bereich ihrer der Schwenkachse 12 gegenüberliegenden Längskante 43. Dem gegenüber drückt nach Fig. 8 der Betätigungsnocken 15 im rechten Bypasskanal 8 gegen die rechte Steuerklappe 10 im Bereich ihrer an die Schwenkachse 10 angrenzenden Längskante 44. Zum Ausgleich der sich ergebenden kinematischen Unterschiede zwischen den Anordnungen nach den Fig. 5 und 8 ist eine Ausbildung der Betätigungsnokken 14, 15 als angepaßte Kurvenscheiben 16, 17 (Fig. 2) zweckmäßig. Alternativ oder in Kombination kann eine versetzte, achsparallele Anordnung von Schwenkachsen 12 zweckmäßig sein, bei der beispielsweise die Schwenkachse 12 der linken Steuerklappe 9 im Bereich ihrer Längskante 42 und die Schwenkachse 12 der rechten Steuerklappe im Bereich der gegenüberliegenden Längskante 45 liegt.

Im gezeigten Ausführungsbeispiel liegt die Steuerwelle 11 mit dem Betätigungsnocken 14, 15 stromauf der beiden Steuerklappen 9, 10, wobei die Steuerklappen 9, 10 durch die Schenkelfedern 37 gegen die Strömungsrichtung der Teilluftströme 28, 29 in Schließrichtung bzw. gegen die Betätigungsnocken 14, 15 gedrückt sind. Der auf die Steuerklappen 9, 10 wirkende Staudruck der Teilluftströme 28, 29 führt zu einer Verringerung des Schwenkmomentes um die Schwenkachse 12 und damit zu einer geringen Betätigungskraft.

## Patentansprüche

1. , Mehrkanalige Heizungs- und/oder Klimaanlage für ein Kraftfahrzeug zur Aufbereitung eines Luftstromes (1), mit einem im Luftstrom (1) angeordneten Heizkörper (2), wobei die Heizleistung des Heizkörpers (2) mittels eines den Fluß eines Wärmemediums (3) durch den Heizkörper (2) steuernden Ventils (4) einstellbar ist, sowie mit mindestens je einem bezogen auf das Fahrzeug linken bzw. rechten Luftführungskanal (5, 6), wobei je ein linker bzw. rechter Bypasskanal (7, 8) am Heizkörper (2) vorbeigeführt und dem jeweiligen linken bzw. rechten Luftführungskanal (5, 6) zugeordnet ist und wobei die Bypasskanäle (7, 8) je eine *um eine Schwenkachse (12) schwenkbare* Steuerklappe (9, 10) aufweisen, die über eine gemeinsame, getrennt *von* der Schwenkachse (12) liegende Steuerwelle (11) unabhängig voneinander betätigbar sind.

2. Anlage nach Anspruch 1,
**dadurch gekennzeichnet, daß** eine der Steuerklappen (9, 10) nur in geschlossenem Zustand der jeweils anderen Steuerklappe (10, 9) betätigbar ist.

3. Anlage nach Anspruch 1 oder 2,
**dadurch gekennzeichnet, daß** die Steuerklappen (9, 10) achsparallel und insbesondere um eine gemeinsame Schwenkachse (12) schwenkbar sind.

4. Anlage nach Anspruch 3,
**dadurch gekennzeichnet, daß** die Steuerwelle (11) mit ihrer Wellenachse (13) parallel zur Schwenkachse (12) liegend angeordnet ist und den Steuerklappen (9, 10) zugeordnete Betätigungsnocken (14, 15) aufweist.

5. Anlage nach Anspruch 4,
**dadurch gekennzeichnet, daß** die der linken bzw. der rechten Steuerklappe (9, 10) zugeordneten Betätigungsnocken (14, 15) bezogen auf die Wellenachse (13) zumindest etwa 180° versetzt angeordnet und derart zu den Steuerklappen (9, 10) beabstandet sind, daß bei zumindest etwa paralleler Lage der Steuernocken zu den Steuerklappen (9, 10) beide Steuerklappen (9, 10) geschlossen sind.

6. Anlage nach Anspruch 4 oder 5,
**dadurch gekennzeichnet, daß** die Betätigungsnocken (14, 15) als Kurvenscheiben (16, 17) ausgebildet sind.

7. Anlage nach einem der Ansprüche 3 bis 6,
**dadurch gekennzeichnet, daß** die Steuerklappe (9, 10) in Schließrichtung mittels Federkraft vorgespannt ist.

8. Anlage nach Anspruch 7,
**dadurch gekennzeichnet, daß** für die Steuerklappe (9, 10) in deren Schließstellung ein Klappenanschlag (18, 19) vorgesehen ist.

9. Anlage nach einem der Ansprüche 1 bis 8,
**dadurch gekennzeichnet, daß** die Steuerwelle (11) mittels eines elektrischen Schrittmotors (20) antreibbar ist.

10. Anlage nach einem der Ansprüche 1 bis 9,
**dadurch gekennzeichnet, daß** bezogen auf die Richtung des Luftstromes (1) vor dem Heizkörper (2) ein Kältemittelverdampfer (30) angeordnet ist.

11. Anlage nach einem der Ansprüche 1 bis 10,
**dadurch gekennzeichnet, daß** außerhalb des Bereiches der Bypasskanäle (7, 8) ein vom Heizkörper (2) beaufschlagter zentraler Hauptluftführungskanal (24) angeordnet ist.

12. Anlage nach Anspruch 7 oder 8,
**dadurch gekennzeichnet, daß** jede der Steuerklappen (9, 10) von einer eigenen Feder (37) kraftbeaufschlagt ist und beide Steuerklappen (9, 10) in ihrer Schließstellung gehalten werden, wenn die Differenz der eingestellten Soll-Temperaturen "Null" ist.

## Claims

1. A heating and/or cooling system for a vehicle with multiple air ducts for the preparation of an air flow (1) having a radiator (2) positioned in the air flow (1), it being possible to adjust the heating capacity of the radiator (2) by means of valve (4) which controls the flow of a heating medium (3) through the radiator (2), and having at least one left-hand and one right-hand air duct (5, 6), positioned in relation to the vehicle, with one left-hand and one right-hand bypass duct (7, 8) bypassing the radiator (2) and being assigned to the left- and right-hand air ducts (5, 6) respectively and the bypass ducts (7, 8) each having a control valve (9, 10) *which is able to pivot about an axis of pivoting (12)* and which can be actuated independently by a common control shaft (11) located *separately from the axis of pivoting (12).*

2. A system in accordance with claim 1,
**characterised in that**
one of the control valves (9, 10) can be actuated only while the other control valve (10, 9) is located in the closed position.

3. A system in accordance with claim 1 or 2,
**characterised in that**
the control valves (9, 10) are axis-parallel and, in particular, pivot about a common axis of pivoting (12).

4. A system in accordance with claim 3,
**characterised in that**
the control shaft (11) with its shaft axis (13) is positioned parallel to the axis of pivoting (12) and has actuating cams (14, 15) assigned to the control valves (9, 10).

5. A system in accordance with claim 4,
**characterised in that**
the actuating cams (14, 15) assigned to the left- and right-hand valves (9, 10) are positioned offset by at least 180° in relation to the shaft axis (13) and located at such a distance from the control valves (9, 10) that when the control cams are positioned approximately parallel to the control valves (9, 10) both control valves (9, 10) are closed.

6. A system in accordance with claim 4 or 5,
**characterised in that**
the actuating cams (14, 15) are designed as curved disks (16, 17).

7. A system in accordance with one of claims 3 to 6,
**characterised in that**
the control valve (9, 10) is pre-tensioned in its direction of closing by means of spring resistance.

8. A system in accordance with claim 7,
**characterised in that**
a valve stop (18, 19) is provided for the control valve (9, 10) in its closed position.

9. A system in accordance with one of claims 1 to 8,
**characterised in that**
the control shaft (11) can be driven by means of an electrical step motor (20).

10. A system in accordance with one of claims 1 to 9,
**characterised in that**
a coolant evaporator (30) is positioned upstream of the radiator (2) in relation to the direction of the air flow (1).

11. A system in accordance with one of claims 1 to 10,
**characterised in that**
positioned outside the area of the bypass ducts (7, 8) is a central main air duct (24) to which hot air is fed by the radiator (2).

12. A system in accordance with claim 7 or 8,
**characterised in that**
force is applied to each of the control valves (9, 10) by its own spring (37) and both control valves (9, 10) are held in the closed position when the difference between the set reference temperatures is "zero".

## Revendications

1. Dispositif multicanal de chauffage et/ou de climatisation pour un véhicule automobile pour le traitement d'un flux d'air (1), avec un corps de chauffe (2) disposé dans le flux d'air (1), dans lequel la puissance calorifique du corps de chauffe (2) est réglable à l'aide d'une soupape (4) commandant le flux d'un fluide calorifique (3) à travers le corps de chauffe (2), et avec au moins un conduit de guidage d'air (5, 6) gauche ou droit par rapport au véhicule, dans lequel un conduit de dérivation (7, 8) gauche ou droit passe devant le corps de chauffe (2) et est associé au conduit de guidage d'air (5, 6) gauche ou droit respectif et dans lequel les conduits de dérivation (7, 8) comportent chacun un clapet de commande (9, 10) pivotant autour d'un axe de pivotement (12), lesquels clapets peuvent être actionnés indépendamment les uns des autres par un arbre de commande (11) commun séparé de l'axe de pivotement (12).

2. Dispositif selon la revendication 1, **caractérisé en ce que** l'un des clapets de commande (9, 10) est actionnable seulement lorsque l'autre clapet de commande (10, 9) est à l'état fermé.

3. Dispositif selon la revendication 1 ou 2, **caractérisé en ce que** les clapets de commande (9, 10) peuvent pivoter parallèlement à un axe et, en particulier, autour d'un axe de pivotement commun (12).

4. Dispositif selon la revendication 3, **caractérisé en ce que** l'arbre de commande (11) est disposé parallèlement à l'axe de pivotement (12) avec son axe d'arbre (13) et comporte des cames de commande (14, 15) associées aux clapets de commande (9 , 10).

5. Dispositif selon la revendication 4, **caractérisé en ce que** les cames de commande (14, 15) associées au clapet de commande gauche ou droit (9, 10) sont décalées d'au moins environ 180° par rapport à l'axe d'arbre (13) et sont espacées des clapets de commande (9, 10) de telle manière que les deux clapets de commande (9, 10) sont fermés lorsque les cames de commande sont au moins sensiblement parallèles aux clapets de commande (9, 10).

6. Dispositif selon la revendication 4 ou 5, **caractérisé en ce que** les cames de commande (14, 15) sont configurées comme des disques à cames (16, 17).

7. Dispositif selon l'une quelconque des revendications 3 à 6, **caractérisé en ce que** le clapet de commande (9, 10) est précontraint dans le sens de fermeture par une force de ressort.

8. Dispositif selon la revendication 7, **caractérisé en ce qu'**il est prévu une butée de clapet (18, 19) pour le clapet de commande (9, 10) dans sa position de fermeture.

9. Dispositif selon l'une quelconque des revendications 1 à 8, **caractérisé en ce que** l'arbre de commande (11) peut être entraîné à l'aide d'un moteur électrique pas à pas (20).

10. Dispositif selon l'une quelconque des revendications 1 à 9, **caractérisé en ce qu'**un évaporateur de fluide de refroidissement (30) est disposé devant le corps de chauffe (2) par rapport au sens du flux d'air (1).

11. Dispositif selon l'une quelconque des revendications 1 à 10, **caractérisé en ce qu'**un conduit de guidage d'air principal (24) alimenté par le corps de chauffe (2) est disposé à l'extérieur de la zone des conduits de dérivation (7, 8).

12. Dispositif selon la revendication 7 ou 8, **caractérisé en ce que** chacun des clapets de commande (9, 10) est actionné par la force de son propre ressort (37) et les deux clapets de commande (9, 10) sont maintenus dans leur position de fermeture lorsque la différence des températures consignes réglées est "zéro".
